Europäisches Patentamt

European Patent Office

Office européen des brevets

(19)

(11) Veröffentlichungsnummer: **0 034 195**

**A1**

(12) # EUROPÄISCHE PATENTANMELDUNG

(21) Anmeldenummer: **80102144.5**

(22) Anmeldetag: **22.04.80**

(51) Int. Cl.³: **G 03 B 23/16**

(30) Priorität: **05.02.80 DE 3004026**

(43) Veröffentlichungstag der Anmeldung:
**26.08.81 Patentblatt 81/34**

(84) Benannte Vertragsstaaten:
**AT BE CH DE FR GB IT LI LU NL SE**

(71) Anmelder: **Rollei-Werke Franke & Heidecke GmbH + Co KG**
**Salzdahlumer Strasse 196**
**D-3300 Braunschweig(DE)**

(72) Erfinder: **Sobotta, Reinhard**
**Schreiberkamp 9**
**D-3300 Braunschweig(DE)**

(74) Vertreter: **Gramm, Werner, Dipl.-Ing. et al,**
**Patentanwälte Gramm + Lins Theodor-Heuss-Strasse 2**
**D-3300 Braunschweig(DE)**

(54) Einrichtung zur Vereinfachung der Bedienung von Überblendprojektoren mit einem Magazin.

(57) Die Erfindung betrifft eine Vereinfachung zur Bedienung von Überblendprojektoren mit einem Magazin. Gemäss der Erfindung sind drei Positionsanzeigen, die jeweils zwei verschiedene Anzeigezustände haben können, für das gerade projizierte bzw. das als nächstes zu projizierende Dia vorgesehen. Die gültigen Positionsanzeigen (2, 4, 6) werden durch Kontakte (66, 68) am Getriebe (60) in Abhängigkeit von Vorwärts-, Rückwärts- und Freistell- oder Select-Impulsen geschaltet. Die Positionsanzeigen (2, 4, 6) sind neben den Gefachnummern (12) des Magazins (25) angeordnet. Dabei befindet sich die Positionsanzeige (4) für die Stellung bei Magazinvorschaltung in der Diawechselebene, die Positionsanzeige (2) für die Select-Stellung befindet sich um eine Fachbreite gegenüber der Positionsanzeige (4) nach links versetzt, und die Positionsanzeige (6) für Magazinrückschaltung befindet sich um eine Gefachbreite rechts neben der Positionsanzeige (4).

FIG.1

COMPLETE DOCUMENT

EP 0 034 195 A1

ROLLEI - WERKE
  Franke  &  Heidecke
    GmbH & Co. KG                          28.01.80
    Braunschweig                           A 1200

Einrichtung zur Vereinfachung der Bedienung von Überblendprojektoren mit einem Magazin.

Die Erfindung betrifft eine Vorrichtung zur Vereinfachung
der Bedienung von Überblendprojektoren mit einem Magazin.
Solche Überblendprojektoren sind z.B. aus der DE-PS 25 42 484
bekannt, deren Inhalt hiermit zum Gegenstand der Offenbarung
der vorliegenden Anmeldung gemacht wird. Einige dieser bekannten Überblendprojektoren weisen eine Anzeige für die
Diaanwahl auf, weitere Anzeigen sind jedoch nicht vorhanden.
Für die Bedienung obiger Überblendprojektoren ist es jedoch
- da immer zwei leere Fächer vorhanden - sehr vorteilhaft,
wenn der Projektorbenutzer leicht feststellen kann, welche
Magazinfachnummer zu dem gerade projizierten Dia gehört.
Die Kenntnis einer solcher Zuordnung ist besonders beim
Programmieren einer gewünschten Projektionsreihenfolge und
beim Vertonen der zu projizierenden Dias wichtig.

Aufgabe der Erfindung ist es, eine Einrichtung zur Bedienungsvereinfachung zu schaffen, welche den Projektorbenutzer
leicht erkennen läßt, welcher Gefachnummer des Magazins das
gerade projizierte Dia entspricht und welches Dia als
nächstes projiziert werden wird.

Diese Aufgabe ist durch die Merkmale des Anspruches 1
gelöst.

Der Erfindung liegt die Erkenntnis zugrunde, daß zur einfachen Ermittlung der Zuordnung zwischen projiziertem Dia und entsprechender Gefachnummer des Magazins drei solcher Anzeigen erforderlich sind. Diese Tatsache beruht, wie weiter unten im Detail beschrieben wird, darauf, daß bei Projektion der Dias in Vorwärtsrichtung, d.h. in ansteigender numerischer Reihenfolge der Magazinfächer, aber auch bei Projektion der Dias in Rückwärtsschaltung, d.h. in der Reihenfolge abfallender numerischer Ordnung der Magazinfachnummer, stets "Pilgerschritte" erforderlich sind, welche jeweils aus einem Schritt zurück und aus zwei Schritten nach vorne bestehen, und das Magazin in einer von zwei unterschiedlichen Positionen nach Beendigung des Schaltvorganges des gesamten Projektors stehen bleiben kann.

Da bei der Umschaltung von Projektion in Magazinvorschaltung auf Projektion mit Magazinrückschaltung eine andere Schrittart erforderlich ist und da ferner der Benutzer die Möglichkeit haben soll, mit einem von ihm gewünschten Dia die Projektionsfolge zu beginnen, war bei den bisher bekannten Überblendprojektoren mit einem Magazin keine Zuordnung zwischen gerade projiziertem Dia und der Gefachnummer, in welchem das Dia sich vorher befunden hat und in welches es wieder zurückgeführt werden soll, möglich. Erst durch die vorliegende Erfindung, wie sie im Anspruch 1 gekennzeichnet ist, ist eine solche Zuordnung möglich geworden.

Nach einer Weiterbildung der Erfindung werden die gültigen Positionsanzeigen durch Kontakte am Getriebe in Abhängigkeit von Vorwärts-, Rückwärts- und Freistellimpulsen geschaltet.

Diese Weiterbildung der Erfindung bringt den Vorteil mit sich, daß die Umschaltung der Positionsanzeigen zwangsläufig erfolgt, so daß stets die richtige Zuordnung gewährleistet ist.

Die Positionsanzeigen sind zweckmässigerweise neben den Gefachnummern des Magazins angeordnet. Auf diese Weise ist die direkte Zuordnung zwischen der anzeigenden Positionseinrichtung und der Gefachnummer gegeben. Es kann jedoch auch die Anzeige der Gefachnummern an der Gehäuseaussenseite vorgesehen sein, wobei die drei Positionsanzeigen neben dieser Gefachanzeige angeordnet sind.

Zweckmässigerweise sind die drei Positionsanzeigen drei aufeinanderfolgenden Gefachnummern zugeordnet. Die mittlere Positionsanzeige ist zweckmässigerweise der Gefachnummer zugeordnet, welche sich in der Diawechselebene befindet. Von den drei Positionsanzeigen sind nach einer anderen Weiterbildung der Erfindung eine der Selectstellung, eine andere Positionsanzeige der Magazinvorschaltung oder Vorwärtsprojektion und die dritte Positionsanzeige der Magazinrückschaltung oder Rückwärtsposition zugeordnet. Die besonderen Vorteile dieser Anordnung werden weiter unten bei der Figurenbeschreibung im Detail weiter erläutert werden.

Nach einer Ausführungsform der Erfindung ist die Anzeigenschaltung so getroffen, daß bei Anzeige der Selectstellung die beiden anderen Anzeigen abgeschaltet sind. Ferner ist zweckmässigerweise ein Umschalter zum Umschalten von der Anzeige der Vorwärtsprojektionsrichtung auf die Rückwärtsprojektionsrichtung und umgekehrt vorgesehen. Als ein solcher Umschalter kann ein Schwenkhebel vorgesehen sein, welcher von Einrichtungen an der Hauptgetriebescheibe des Überblendprojektors dann umgelegt wird, wenn dieser einen Antriebsschritt entgegengesetzt zur Richtung des vorhergehenden Antriebsschrittes ausführt.

Das freie Ende dieses Umschaltschwenkhebels ist vorteilhafterweise stets gegen den Umfang der Hauptgetriebescheibe vorgespannt, und dieser weist zweckmässigerweise an ihrem Umfang Vertiefungen auf, welche das freie Ende des Umschaltschwenkhebels aufnehmen und diesen umlegen können. Es können je eine Vertiefung rechts und links der radialen Verbindungslinie zwischen dem Mittelpunkt der Hauptgetriebescheibe und dem Schwenkpunkt des Umschaltschwenkhebels ausgebildet sein.

Nach einer anderen Weiterbildung der Erfindung sind an der Hauptgetriebescheibe zwei Paar solcher Umlenkvertiefungen ausgebildet, wobei je zwei Vertiefungen einander etwa diametral gegenüberliegen.

Nach einer anderen Weiterbildung der Erfindung umfaßt der Selectschalter einen Selectumschalthebel, welcher in seiner einen Endlage an einem Anschluß der Selectpositionsanzeige anliegt und deren Stromkreis schließt und welcher in seiner anderen Stellung die elektrische Verbindung zu dem Umlenkschalter schließt, welcher stets mit einem Anschluß entweder der Anzeige für die Vorwärtsprojektion oder aber mit einem Anschluß der Anzeige für die Rückwärtsprojektion verbunden ist.

Die Erfindung ist im Folgenden anhand eines Ausführungsbeispiels und in Verbindung mit der Zeichnung näher beschrieben.
Es zeigen:

Fig. 1 die wesentlichen Teile eines Überblendprojektors in der Stellung "Select",

Fig. 2 den Überblendprojektor der Fig. 1 in der Stellung "Magazinvorschaltung",

Fig. 3 den Überblendprojektor der Fig. 1 und 2 in der Stellung "Magazinrückschaltung" und

Fig. 4 eine Anordnung zur Schaltung der drei Positionsanzeigen durch Kontakte am Getriebe in Abhängigkeit von Vorwärts-, Rückwärts und Freistellimpulsen.

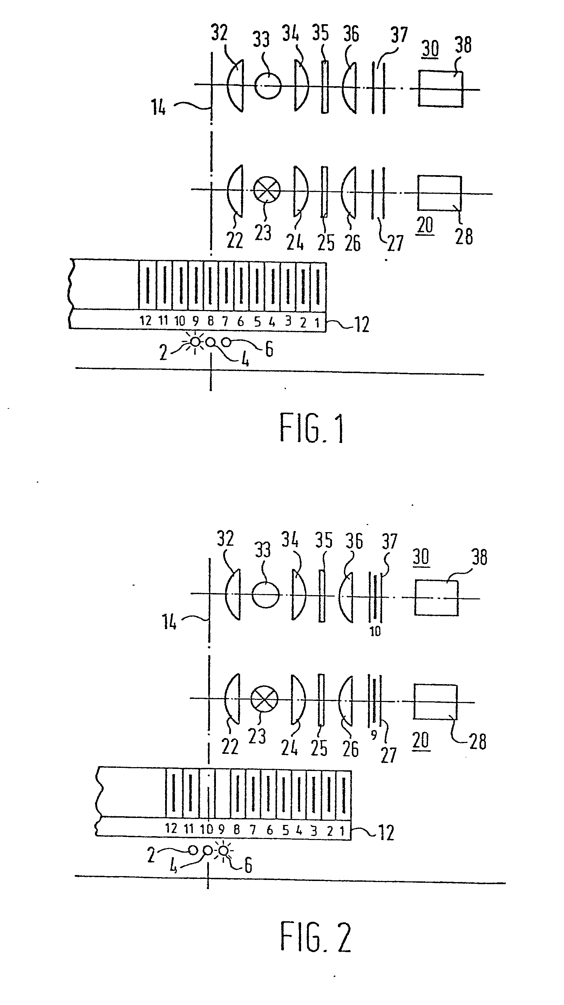

In der Fig. 1 sieht man die wesentlichen Teile eines Überblendprojektors, nämlich das Magazin 1o, welches die Dias enthält, einen Projektionsschlitten 2o und einen Projektionsschlitten 3o. Der Projektionsschlitten 2o umfaßt einen Reflektor 22, eine Lampe 23, Kondensatorlinsen 24 und 26, zwischen diesen einen Wärmefilter 25 und eine Bildbühne 27. Ein Objektiv 28 ist fest davor angeordnet. Der Projektionsschlitten 30 umfaßt ebenfalls einen Reflektor 32, eine Lampe 33, Kondensatorlinsen 34 und 36, zwischen letzteren einen Wärmefilter 35 und eine Bildbühne 37. Ein Objektiv 38 ist fest vor der Bildbühne angeordnet.

Neben dem Magazin 10, welches eine Leiste aufweist, auf welcher die Gefächer numeriert sind, ist eine Anzeigeein-richtung mit drei Positionanzeigen 2, 4 und 6 angeordnet. Der schwarz ausgefüllte Kreis der Positionsanzeige 2 bedeutet, daß diese Anzeige leuchtet, während die als leere Kreise dargestellten Positionsanzeigen 4 und 6 nicht leuchten.

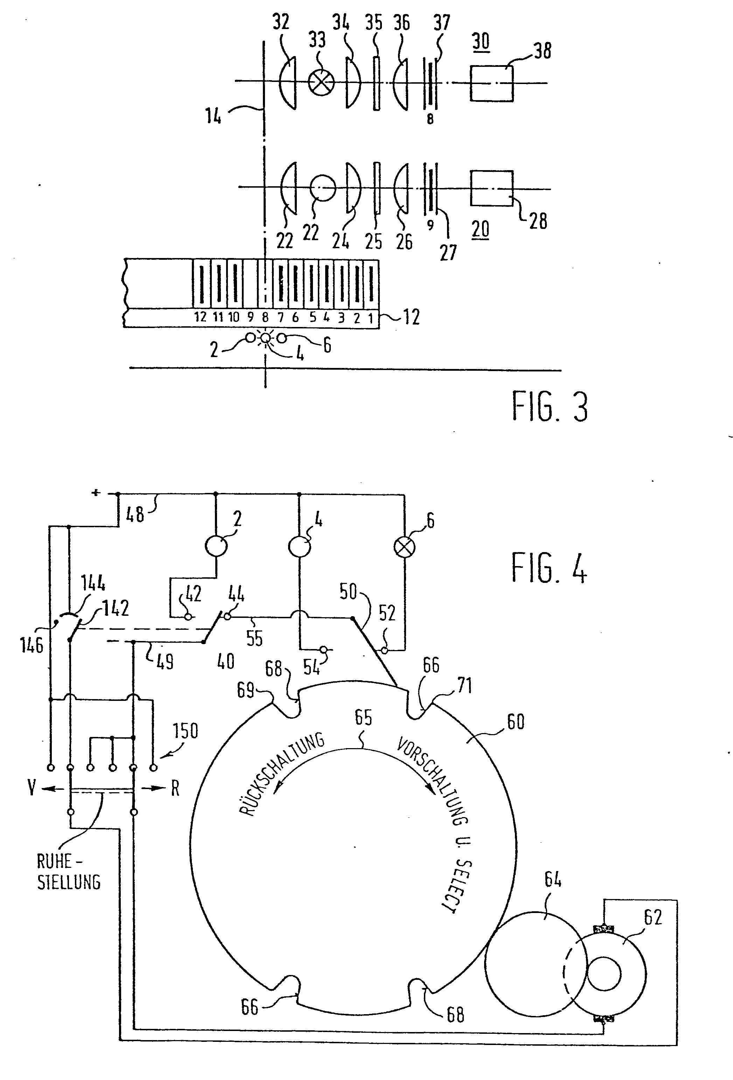

Die Fig. 1 zeigt die "Select"-Stellung. In dieser Stellung befindet sich das Gefach No. 8 in der Diawechselebene und die Positionsanzeige 2 leuchtet auf. Das bedeutet, daß dieses Dia No. 9 als nächstes zu projizierendes Dia ausgewählt worden ist. Um mit der Projektion zu beginnen, wird der Select-Schalter erneut betätigt, d.h. er wird im Ausführungsbeispiel nach rechts gebracht. Dadurch werden durch weitere 20, in der Fig. 4 dargestellte Kontakte zwei Vorwärtsabläufe ausgelöst, um das Dia No. 9 in die Bildbühne 27 des Schlittens 20 und das Dia No. 10 in die Bildbühne 37 des Schlittens 30 zu bringen. Diese Abläufe beginnen zunächst mit einem Rückwärtsschritt, bei dem das Gefach No. 7 in der Diawechselebene 14 zu liegen kommt. Geladen wird in dieser Position nicht. Erst danach, nämlich wenn das Magazin um zwei Vorwärtsschritte, in der Fig. 1 also nach rechts, weitertransportiert worden ist, wird geladen. In dieser Position befindet sich das Gefach No.9 in der Diawechselebene und deshalb wird auch dieses Dia No. 9 in die Bildbühne 27 des Projektionsschlittens 20 geladen. Danach wird das Magazin 25 um einen Schritt nach links gefahren.

Anschließend wird das Magazin wiederum um zwei Schritte nach rechts verschoben, woraufhin das Gefach No. 1o sich in der Diawechselebene 14 befindet, und das entsprechende Dia in die Bildbühne 37 des Schlittens 3o geladen wird, welcher dann wieder in seine Projektionsstellung nach vorne fährt. In dieser Position kann jetzt das Dia No. 9 projiziert werden, was durch den schwarzen Vollkreis der Positionsanzeige 6 in Fig. 2 dargestellt ist, welche die Stellung bei Magazinvorschaltung veranschaulicht. In dieser Stellung befindet sich das Magazin somit um zwei Schritte weiter rechts als in der Select-Stellung in Fig. 1. Das Dia No. 9 wird projiziert, was durch das Kreuz in der Lampe 23 angezeigt wird und das Dia No. 1o befindet sich in Bereitschaftsstellung. Sobald jetzt ein neuer Impuls zur Projektion des nächsten Dias gegeben wird, wird zunächst die Lampe 33 des Projektionsschlittens 3o aufleuchten und dann verlischt die Lampe No. 23 des Projektionsschlittens 2o. Dieser wird jetzt zurückgefahren , damit das Dia No. 9 wieder in die Gefach No. 9 eingebracht und dann Dia No. 11 geladen werden kann. Die Einzelheiten dieses Wechselvorganges sind z.B. aus der eingangs genannten DE-PS 25 42 484 bekannt, so daß sie nicht näher beschrieben werden müssen.

Während des Diawechsels selber kann nach einer Ausführungsform der Erfindung die Indexlampe oder Positionsanzeige abgeschaltet werden. Sie kann wieder aufleuchten, wenn das Dia No. 1o im Projektionsschlitten 3o projiziert wird und das nächste Dia No. 11 im Projektionsschlitten 2o zur Projektion bereitsteht. Bei dieser Ausführungsform leuchtet die Positionsanzeige immer erst dann auf, wenn das nächste Dia zur Projektion bereitsteht. In dieser Position befindet sich das Magazin 25 in Ruhestellung.

Die Fig. 3 zeigt den Überblendprojektor in seiner Stellung

bei der Magazinrückschaltung. Der Übergang zu dieser Stellung soll, ausgehend von derjenigen der Fig. 2, beschrieben werden. Wenn zunächst das Dia No. 9 projiziert wurde, vergl. Fig. 2, und das Dia No. 1o sich in Bereitschaftsstellung befand, wenn dann aber die Dias in Rückwärtsfolge projiziert werden sollen, muß zunächst das Dia No. 1o aus der Bildbühne 37 entfernt und das Dia No. 8 in diese Bildbühne eingebracht werden. Bei Eintreffen des Rückschaltimpulses wird deshalb zunächst der Schlitten 3o mit dem Dia No. 1o um einen Schritt nach links verfahren und das Dia No. 1o wird in das Magazin zurückgeführt. Jetzt muß aber ein zweifacher Schritt des Magazins 25 in dieser Rückwärtsrichtung nach links erfolgen, damit das Dia der Gefach No. 8 in die Diawechselebene 14 zu liegen kommt und das Dia No. 8 in die Bildbühne 37 geladen werden und, durch Verfahren des Schlittens 3o, in Bereitschaftsstellung gebracht werden kann. Erst jetzt kann die Überblendung von Dia No. 9 auf das Dia No. 8, also in absteigender Reihenfolge erfolgen. Dieser Zustand ist in der Fig. 3 dargestellt, in welcher die Lampe 33 des Projektionsschlittens 3o leuchtet und in welcher das Magazin 25 sich mit der Gefach-No. 8 in der Diawechselebene befindet.

Aus dieser Beschreibung ergibt sich ein grundsätzlicher Unterschied zwischen der Vorwärtsprojektion und der Rückwärtsprojektion. Bei der Vorwärtsprojektion steht nach Beendigung des Lade- und Wechselvorgangs, während noch ein Dia projiziert wird, z.B. Dia No. 9, das nächst höhere Dia zur Projektion bereit. Die Überblendung kann also unmittelbar nach Eintreten des Vorschaltimpulses beginnen, indem die Lampe des Schlittens mit dem in Bereitschaftsstellung sich befindenden, nächst höheren Dia eingeschaltet und dann die Lampe des anderen Projektionsschlittens ausgeschaltet wird. Nach der erfolgten Überblendung erfolgt dann die Auswechselung des Dias des nicht projizierenden Projektionsschlittens.

Soll dagegen auf Magazinrückschaltung umgeschaltet werden, soll also das Dia des numerisch nächst niedrigen Gefaches projiziert werden, so steht auf Grund der bisherigen Schrittfolge das verkehrte, also das nächst höhere Dia in Bereitschaftsstellung. Bei Umschaltung auf Magazinrückschaltung kann also keine direkte Überblendung begonnen werden. Vielmehr muß zunächst das sich in Bereitschaftsstellung befindende Dia in das Magazin zurückgefahren und das nächst niedere Dia geladen und in Bereitschaftsstellung gebracht werden. Erst jetzt kann die Überblendung erfolgen. In dieser Reihenfolge, nämlich zunächst das Auswechseln des Dias und die darauf folgende Überblendung, wiederholt sich stets, wenn das nächst niedrigere Dia projiziert werden soll. Wird dagegen, nachdem eine beliebige Anzahl von Dias in Magazinrückschaltung nacheinander projiziert worden ist, wieder in Vorwärtsrichtung, also das Dia des numerisch nächst höheren Faches projiziert, so kann unmittelbar nach Eintreffen des Umschaltimpulses die Überblendung beginnen, da das nächst höhere Dia sich in Bereitschaftsstellung befindet.

In Fig. 4 ist eine Einrichtung zur Umschaltung der Positionsanzeigen 2, 4 bzw. 6 dargestellt. Im oberen Teil dieser Fig. 4 sieht man die drei Positionsanzeigen 2, 4 und 6, welche im Ausführungsbeispiel 3 Leuchtdioden darstellen. Die Positionsanzeige 6 leuchtet, wodurch angezeigt wird, daß der Überblendprojektor sich in seiner Stellung in Magazinvorschaltung befindet.

Die drei Leuchtdioden 2, 4 und 6 sind mit einem Anschluß an eine gemeinsame Leistung 48 angeschlossen. Die andere Leitung 49 führt zu einem Schalter 40, dem Selectschalter, der durch weiter unten beschriebene Kontakte bei jedem Umlegen eine Vorwärtsumdrehung der Steuerscheibe veranlaßt. Wenn dieser Selectschalter 40 sich in seiner linken Schalterstellung befindet, die durch gestrichelte Linien dargestellt ist, verbindet er die Leitung 49 mit einem Anschluß 42 der Positionsanzeige 2, welche dann aufleuchtet und damit anzeigt, daß der Überblendprojektor sich in der Selectstellung befindet.

Die Positionsanzeigen 4 und 6 können nur über eine Leitung 55 und deren Kontakt 44 mit der anderen Versorgungsleitung 49 verbunden werden. Wenn der Selectschalter 4o sich in seiner linken Stellung befindet, ist der Schaltkontakt 44 frei und weder die Positionsanzeige 4 der Magazinvorschaltung noch die Positionsanzeige 6 der Magazinrückschaltung können aufleuchten.

Befindet dagegen der Selector 4o sich in seiner rechten Stellung, wie es durch den ausgezogenen Strich in Fig. 4 dargestellt ist, so verbindet er die Leitung 49 mit einem Umschalter 5o. Dieser kann zwei Stellungen einnehmen, entweder die in Fig. 1 durch den ausgezogenen Strich dargestellte Position, in welcher er den Anschluß 52 der Positionsanzeige 6 mit der Leitung 55 verbindet. In seiner anderen, durch die gestrichelte Linie angedeutete Position verbindet der Umschalter 5o den Anschluß 54 der Positionsanzeige 4 mit der Leitung 49 und bringt diese Positionsanzeige 4 zum Leuchten.

Der Umschaltarm 5o ist federnd gegen den Umfang einer Steuerscheibe 6o vorgespannt, welche von einem Motor 62 über ein Getriebe 64 angetrieben wird. Bei Magazinvorschaltung und bei Selectschaltung erfolgt der Antrieb der Hauptgetriebescheibe 6o im Uhrzeigersinn und bei Magazinrückschaltung erfolgt der Antrieb entgegen dem Uhrzeigersinn, wie es durch den Doppelpfeil 65 dargestellt ist.

Bei jedem Diawechsel dreht diese Steuerscheibe sich um 180°. Wenn diese Steuerscheibe 6o sich nach rechts bewegt, gleitet der Umschaltarm 5o, welcher gegen die Hauptgetriebescheibe 6o federnd vorgespannt ist, an deren Umfang entlang. Während die an dem Umfang ausgebildete Vertiefung 68 unter dem frei verschwenkbaren Ende des Umschaltarmes 5o hindurchgeführt wird, fällt dieser ein Stück in diese Vertiefung hinein, bis er an der Kante 69 zur Anlage kommt, und von dieser Kante wird er dann wieder nach rechts angehoben, so daß er den Anschluß 52 der Positionsanzeige 6 mit der Versorgungsleitung 49 verbindet.

Wird dagegen die Hauptgetriebescheibe 6o bei Magazinrückschaltung um 180° nach links verdreht, so fällt das freie Ende des Umschaltarms 5o kurz nach Einsetzen dieser Bewegung in die Vertiefung 66 am Umfang der Hauptgetriebescheibe 6o. Diese Vertiefung 66 ist so tief ausgebildet, daß bei der Drehung der Hauptgetriebescheibe 6o nach links das untere Ende des Umschaltarms 5o aufgenommen und der gesamte Umschaltarm 5o aus seiner dargestellten Position nach links umgelegt wird. Durch die Kante 71 der Vertiefung 66 wird der Umschaltarm 5o nach links angehoben, und dann beim weiteren Drehen der Hauptgetriebescheibe 6o kommt das untere Ende des Umschaltarmes 5o wieder an dem Außenumfang der Hauptgetriebescheibe 6o zu liegen, wobei der Anschluß 54 der Positionsanzeige 4 mit der Versorgungsleitung 49 verbunden wird. Dadurch leuchtet die Leuchtdiode 4 auf, wodurch angezeigt wird, daß der Überblendprojektor sich in Magazinrückschaltung befindet.

Solange weiterhin in Magazinrückschaltung projiziert wird, solange die Hauptgetriebescheibe also Drehungen um 180° jeweils nach links durchführt, bleibt der Umschaltarm 5o in dieser Position. Wird die Hauptgetriebescheibe wieder nach rechts gedreht, so wird dort dieser Umschaltarm 5o wieder umgelegt.

In Fig. 4 ist eine Wippe oder ein Wippschalter 140 dargestellt. Bei Betätigung des Selectschalters, wenn der Kontakt 40 von rechts nach links umgelegt wird, wird gleichzeitig der Schalterarm 142 umgelegt, welcher mechanisch mit dem Hebel oder Schaltarm 40 verbunden ist, was durch die Verbindungslinie angedeutet ist. Während dieser Schwenkbewegung wird das verschwenkbare Ende des Umlenkarms 142 an einer Kontaktbahn 144 entlang bewegt. Bei der weiteren Bewegung wird dieser Schluß des Wischkontaktes 142 - 144 wieder unterbrochen und in der linken Endlage liegt der Umlenkarm an einem Anschlag 146 an, ohne irgendeine elektrische Verbindung herzustellen. Durch das Schließen des Wischkontaktes wird eine Verbindung zu dem Motor 62 hergestellt, welcher eine Vorwärtsbewegung ausführt. Der beim Schließen des Wischkontaktes geschlossene Stromkreis wird durch eine geeignete Schaltung solange aufrecht erhalten, wie die Hauptgetriebescheibe für eine volle Umdrehung benötigt.

Der gleiche Vorgang wiederholt sich, wenn der Selectschalter wieder nach rechts umgelegt wird. Auch in diesem Fall führt die Hauptgetriebescheibe wieder eine volle Umdrehung in Vorwärtsrichtung aus. Der unten links in Fig. 4 gezeigte Betriebsschalter ist ein Pol-Wende-Schalter 150. Durch kurzes Verschieben und damit Schließen der linken Kontakte wird der Motor angesteuert, so daß die Hauptgetriebescheibe eine halbe Umdrehung in Vorwärtsrichtung durchführt. Umgekehrt wird bei Betätigung dieses Wipp- oder Pol-Wende-Schalters nach rechts der Motor so angesteuert, so daß die Hauptgetriebescheibe eine halbe Umdrehung in Rückwärtsrichtung durchführt. Auch in diesem Falle können geeignete Zwischenschaltungen vorgesehen sein, welche die Stromversorgung solange aufrecht erhalten, bis jeweils die halbe Umdrehung entweder in Vorwärtsrichtung, bzw. in Rückwärtsrichtung, vollendet ist.

Es wird nochmals darauf hingewiesen, daß der Pilgerschritt bei jedem Überblendprojektor mit nur einem Magazin absolut notwendig ist. Er ist also unabhängig von dem Motorantrieb und auch von der Art der Steuerung, die zur Durchführung dieses Pilgerschrittes führt. Es sind deshalb diese drei Positionsanzeigen oder diese drei Indizes notwendig. Die beiden Positionsanzeigen zur Magazinvorschaltung und Magazinrückschaltung sind deshalb notwendig, weil das Magazin sich bei Magazinvorschaltung mit einer anderen Gefachnummer in der Diawechselebene befindet als bei Magazinrückschaltung.

Ferner ist eine dritte Positionsanzeige für die Selectstellung notwendig.

Soll jetzt, nachdem in Vorwärts- oder in Rückwärtsrichtung oder aber auch nach mehrfacher Umschaltung, ein Dia aus einem anderen Magazin projiziert werden oder aber auch ein Dia desselben Magazins, welches sich jedoch nicht neben dem zuletzt projizierten Dia befindet, projiziert werden, so wird die Select-Taste bedient, im Ausführungsbeispiel nach links. Dabei wird zunächst der Select-Schalter 4o an den Kontakt 42 der Positionsanzeige 2 umgelegt, wodurch diese mit Strom versorgt wird und aufleuchtet. Ferner müssen beide Dias, die sich in den beiden Bildbühnen 27 bzw. 37 der Projektionsschlitten 2o bzw. 3o befinden, zunächst in das Magazin zurückgebracht werden. Zu diesem Zweck werden zwei Diawechselzyklen in Vorwärtsrichtung durchgeführt, indem die Hauptgetriebescheibe 6o um 360° nach rechts, also in Vorwärtsrichtung, gedreht wird. Der Select-Schalter löst somit jeweils auch Impulse für den Antriebsmotor selber aus. Beim Betätigen dieses Selectschalters werden zwei vollständige, ganz normale Funktionsabläufe durchgeführt, dabei wird lediglich der Greifer arretiert, so daß die Dias zwar entladen, aber keine neuen Dias eingeladen werden. Der Ausstoßer arbeitet während dieser beiden Funktionsabläufe völlig normal.

Nach dem Entladen der beiden Dias ist das Magazin völlig frei verschiebbar. Soll z.B. das Dia des Gefaches No. 9 als nächstes Dia projiziert werden, so wird das Magazin in die in

Fig. 1 dargestellte Position verfahren, in welcher die Gefach No. 8 sich in der Diawechselebene und das Gefach No. 9 sich neben der Positionsanzeige 2 befindet. Durch erneutes Betätigen des Select-Schalters, wobei dieser nach rechts gebracht wird, werden wiederum zwei Funktionsabläufe in Vorwärtsrichtung durchgeführt. Beim ersten Funktionsablauf erfolgt ein Rückwärtsschritt, bei dem das Gefach No. 7 in die Wechselebene zu liegen kommt, dann wird das Magazin 25 um einen zweifachen Schritt vorwärts verschoben, so daß jetzt die Gefach No. 9 in der Diawechselebene liegt und das in diesem Gefach enthaltene Dia in die Bildbühne 27 eingebracht werden kann. Beim nächsten Funktionsablauf wird das Magazin 25 wiederum um einen Schritt nach links verfahren, wobei das Gefach No. 8 in der Diawechselebene zu liegen kommt, und danach wird das Magazin 25 um zwei Schritte nach rechts verfahren, woraufhin das Dia des Gefachs No. 1o sich in der Diawechselebene befindet und in den Schlitten 37 geladen wird. Schon während dieses zweiten Funktionsablaufes kann die Lampe 23 bereits angeschaltet und das Dia No. 9 bereits projiziert werden, während das Dia No. 1o in Bereitschaftsstellung gebracht wird, wie es in Fig. 2 dargestellt ist.

ROLLEI-WERKE
  Franke & Heidecke
  GmbH & Co. KG                    28.01.80
  Braunschweig                     A 1200

Ansprüche

1. Einrichtung zur Vereinfachung der Bedienung von Überblendprojektoren mit einem Magazin, das infolge des Überblendvorganges mindestens zwei leere Gefache aufweist, dadurch gekennzeichnet, daß drei Positionsanzeigen (2,4,6), die jeweils zwei verschiedene Anzeigezustände haben können, vorhanden sind und jeweils eine davon das Magazinfach des gerade projizierten Dias bzw. das Magazinfach des als nächstes zur Projektion gelangenden Dias anzeigt.

2. Einrichtung nach Anspruch 1, dadurch gekennzeichnet, daß die gültigen Positionsanzeigen (2,4,6) durch Kontakte (66, 68) in Abhängigkeit von Vorwärts-, Rückwärts- und Freistell- oder Select-Impulsen geschaltet werden.

3. Einrichtung nach einem der Ansprüche 1 oder 2, dadurch gekennzeichnet, daß die Positionsanzeigen (2, 4, 6) neben den Gefachnummern (12) des Magazins (25) angeordnet sind.

4. Einrichtung nach einem der Ansprüche 1-3, dadurch gekennzeichnet, daß die Lage des Magazins und die Gefachnummern an der Gehäuseaußenseite angezeigt werden und daß die Positionsanzeigen (2,4,6) neben dieser Gefachanzeige angeordnet sind.

5. Einrichtung nach einem der Ansprüche 1-4, dadurch gekennzeichnet, daß die Positionsanzeigen (2,4,6) drei aufeinander folgenden Gefachnummern zugeordnet sind.

6. Einrichtung nach einem der Ansprüche 1-5, dadurch gekennzeichnet, daß die mittlere Positionsanzeige (4) der Gefachnummer zugeordnet ist, welche sich in der Diawechselebene (14) befindet.

7. Einrichtung nach einem der Ansprüche 1-6, dadurch gekennzeichnet,daß eine Positionsanzeige (2) der Selectstellung, eine andere Positionsanzeige (4) der Magazinvorschaltung oder Vorwärtsprojektion und eine dritte Positionsanzeige (6) der Magazinrückschaltung oder Rückwärtsprojektion zugeordnet sind.

8. Einrichtung nach einem der Ansprüche 1-7, dadurch gekennzeichnet, daß die Anzeigenschaltung so getroffen ist, daß bei Anzeige der Selectstellung die beiden anderen Anzeigen (46) abgeschaltet sind.

9. Einrichtung nach einem der Ansprüche 1-8, dadurch gekennzeichnet, daß ein Umschalter (5o) zur Umschaltung von der Anzeige der Vorwärtsprojektionsrichtung auf die Rückwärtsprojektionsrichtung und umgekehrt vorgesehen ist.

10. Einrichtung nach einem der Ansprüche 1-9, dadurch gekennzeichnet, daß der Umschalter (5o) als Schwenkhebel ausgebildet ist, welcher von der Einrichtung (66, 68) der Hauptgetriebescheibe (6o) des Überblendprojektors dann umgelegt wird, wenn diese einen Antriebsschritt entgegengesetzt zur Richtung des vorhergehenden Antriebsschrittes ausführt.

1/2

FIG. 1

FIG. 2

FIG. 3

FIG. 4

RÜCKSCHALTUNG

VORSCHALTUNG U. SELECT

RUHE-STELLUNG

V    R

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - C3 - 2 542 484 (ROLLEI -WERKE FRANKE & HEIDECKE) | 1 |
| | --- | |
| A | DE - A - 2 324 396 (E. LEITZ GMBH) * Ansprüche; Fig. 1 bis 3 * | |
| | --- | |
| A | DE - A1 - 2 433 042 (BRAUN AG) | |
| | ----- | |

### KLASSIFIKATION DER ANMELDUNG (Int. Cl.³)

G 03 B 23/16

### RECHERCHIERTE SACHGEBIETE (Int. Cl.³)

G 03 B 23/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 11-05-1981 | HOPPE |

EPA form 1503.1  06.78